# EUROPEAN PATENT APPLICATION

(11) **EP 2 128 801 A1**
(43) Date of publication of application: **02.12.2009**
(21) Application number: 09250508.0
(22) Date of filing: 25.02.2009
(51) Int. Cl.: G06K 19/00, G06K 19/077, H01Q 1/22, E04B 1/41, E04C 5/00

(54) **RFID tag for enforced concrete structure**

(30) Priority: 26.05.2008 JP 2008136182
(71) Applicant: Hitachi Ltd., Chiyoda-ku Tokyo (JP)
(72) Inventor: Sakama, Isao, Chiyoda-ku, Tokyo 100-8220 (JP)
(74) Representative: Calderbank, Thomas Roger

(57) **Abstract**

The RFID tag (10) of this invention uses reinforcing bars (11) in a concrete structure as a sub-antenna. Accordingly, the RFID tag (10) can be mounted close to the reinforcing bars, reducing the size of the tag and widening the range that information in the IC chip (2) attached to the RFID (10) tag can be read.

## Description

The present invention relates to a technology of transmitting and receiving information via radio communication and more specifically to a device built into (an interior of) structures including buildings. One example of the radio communication device includes an RFID (Radio Frequency Identification) tag that transmits information such as ID (Identification) recorded in an IC chip wirelessly at RF (Radio Frequencies).

In recent years, growing importance is being placed on an ability to trace information such as composition and material of goods, manufacturing process, distribution channels and maintenance history after sale. As a means of tracing these information there are reports on application of RFID tags. Under these circumstances, there are growing demands for a traceability of buildings and home facilities. This will lead to improved durability of house and other buildings and of facilities used in them and ultimately reduce the amount of housing-related industrial wastes. In other words the traceability is intended to reduce an environmental burden.

How the RFID tag is built into a building is disclosed by JP-A-2006-348538, which shows an RFID of a type attached to reinforcing rods embedded in concrete. JP-A-2007-224654 discloses an RFID tag that is built into a protrusion formed on a surface of concrete products.

JP-A-2006-348538 and JP-A-2007-224654 disclose as a commonly observed problem a relation between concrete structures or reinforcing bars - a main constitutional material of the concrete product - and a radio wave by which the RFID tag transmits and receives information. That is, these patent documents disclose that the reinforcing bars should not be arranged close to the RFID tag that uses radio waves.

The technologies of those patent documents require as a necessary condition that the RFID tag be placed remote from the reinforcing bars in the concrete, that the RFID tag mounting surface be stable at all times and that the antenna face toward the concrete surface side. Although, for the solution of the above problem, the above patent documents describe the use of a spacer or magnetic sheet in the concrete, there is a concern that putting large spacers in the concrete may degrade the concrete strength. In a problem described later the conventional RFID tag is expected to reduce a thickness of concrete covering the reinforcing bars and to cause cracks in the concrete where the RFID tag is installed and thereby neutralization of the concrete is accelerated.

The present invention may overcome the above-mentioned problems. It is therefore a preferred object of this invention to provide an RFID tag for use in concrete structures and concrete products, which is capable of utilizing reinforcing bars in the concrete as a sub-antenna and which can easily be mounted and allows information recorded in the RFID tag to be read easily. This invention can also be applied to other materials than concrete.

The RFID tag of this invention may achieve the above objective. Therefore, the RFID tag of this invention is the one that incorporates an IC chip capable of transferring information to and from the outside in a non-contact manner, and is used in a manner that structural materials including reinforcing bars in the concrete structures are made use of at least as a part of its antenna. This invention also includes a construction that uses the reinforcing bars as a sub-antenna.

In the RFID tag of this invention, since it uses reinforcing bars in a concrete structure as a sub-antenna, the RFID tag can be mounted close to the reinforcing bars, reducing the size of the tag and widening the range that information in the IC chip attached to the RFID tag can be read.

Other objects, features and advantages of the invention will become apparent from the following description of the embodiments of the invention taken in conjunction with the accompanying drawings.

### In the drawings:

FIG. 1 is a view illustrates a fundamental principle of this invention.
FIG. 2 is a view illustrating a construction of an RFID tag in the first embodiment of this invention.
FIGS. 3A-3C are views illustrating cross-sectional construction of the RFID tag in the first embodiment of this invention.
FIG. 4 is a view illustrating a construction of a second RFID tag in the first embodiment of this invention.
FIGS. 5A-5C are views illustrating a second cross-sectional construction of the RFID tag in the first embodiment of this invention.
FIGS. 6A and 6B are views illustrating a third RFID tag in the first embodiment of this invention.
FIG. 7 is a view illustrating another method of mounting the IC chip in the first embodiment of this invention.
FIG. 8 is a view illustrating a method of mounting an RFID tag in the second embodiment of this invention.
FIGS. 9A and 9B are view illustrating a construction of the RFID tag in the second embodiment of this invention.
FIGS. 10A and 10B are view illustrating a construction of a second RFID tag in the second embodiment of this invention.
FIGS. 11A and 11B are view illustrating a construction of an RFID tag in the third embodiment of this invention.
FIGS. 12A-12C are view illustrating a construction of a second RFID tag in the third embodiment of this invention.
FIG. 13 is a view illustrating a method of mounting an RFID tag in the fourth embodiment of this invention.
FIGS. 14A-14C are view illustrating a construction of the RFID tag in the fourth embodiment of this invention.
FIGS. 15A-15C are view illustrating a construction of a second RFID tag in the fourth embodiment of this invention.
FIGS. 16A-16C are view illustrating a construction of an RFID tag in the fifth embodiment of this invention.
FIG. 17 is a view illustrating an RFID tag reading range in the fifth embodiment of this invention.
FIGS. 18A-18D are explanatory views illustrating connection between an IC chip and an antenna.

Now, modes of implementing the present invention (hereinafter simply referred to "embodiments") will be explained using preferred examples by referring to the accompanying drawings.

### <First Embodiment>

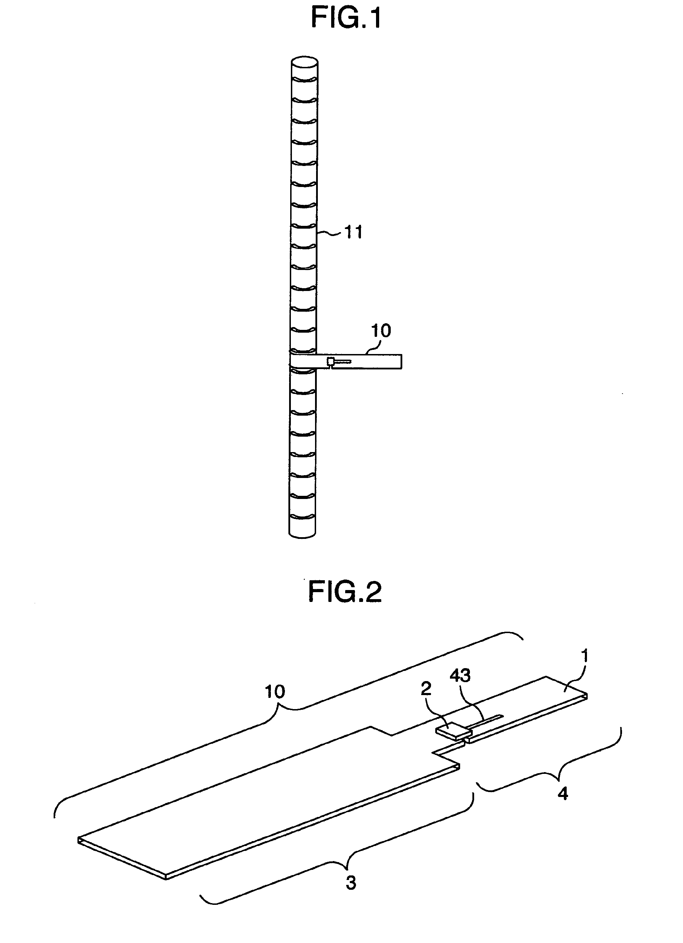

An RFID tag of the first embodiment will be explained by referring to FIG. 1. An RFID tag 10 mounting an IC chip is put in contact with a reinforcing bar 11 embedded in a concrete structure. The RFID tag 10 and the reinforcing bar 11 may be put in direct contact with each other or connected together through an insulator. The basic principle of this invention is to use the reinforcing bar in the concrete structure as a sub-antenna of the RFID tag.

Next, by referring to FIG. 2, the construction of the RFID tag 10 of the first embodiment will be explained. The RFID tag 10 comprises a connecting portion 3 and an inlet portion 4. The inlet portion 4 has an antenna 1 made of a conductor, an IC chip 2 of a semiconductor and a slit 43 that forms an impedance matching circuit between the antenna 1 and the IC chip 2. The connection between the antenna 1 and the IC chip 2 will be described later. In this embodiment the bar holding portion 3 and the inlet portion 4 are formed of one integral material. More specifically, the IC chip 2 mounted on a 0.5 mm thick Fe plate that is plated with Sn is enclosed by a protective layer 13 of epoxy resin. This manufacturing method is similar to the semiconductor IC package manufacturing method using lead frames. The antenna 1 preferably has a length approximately 1/4 of the radio wavelength used.

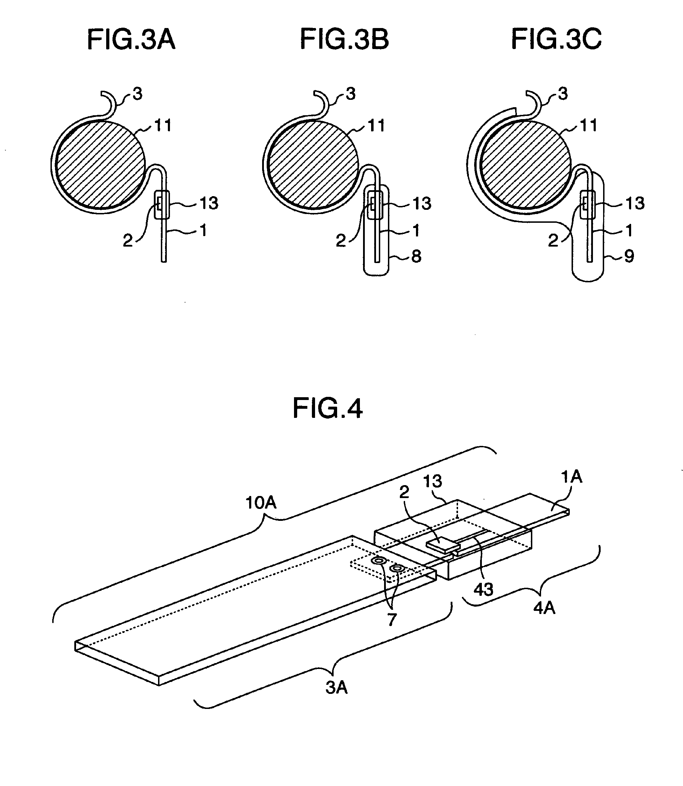

How the reinforcing bar 11 and the RFID tag 10 are connected will be explained by referring to FIGS. 3A-3C. FIG. 3A represents an example in which the bar holding portion 3 is wound around the reinforcing bar 11 like a letter of C. FIG. 3B represents an example construction that overcomes a problem encountered when the reinforcing bar 11 is large, for example, more than 20 mm in diameter. More specifically, when the RFID tag 10 is wound around the large-diameter bar, the slit 43 and the IC chip 2 of the inlet portion 4 may be subjected to large stresses, resulting in the IC chip 2 being broken or the connection between the IC chip 2 and the antenna 1 coming apart. To avoid this, the construction of FIG. 3B has an increased protective layer 13 around the IC chip 2 to reduce the rate of IC chip failure due to the stresses during the RFID tag mounting process. FIG. 3C shows an example construction of the reinforcing bar 11 and the RFID tag 10 being connected more firmly. This also represents the RFID tag 10 of FIG. 3A formed with a resin mold 9 on the outer side thereof. The resin mold 9 provided on the outer side of the bar holding portion 3 can firmly hold the bar holding portion 3. Further, since the inlet portion 4 as a whole is protected by the mold 9, more reliable RFID tag 10 can be fabricated. The mold 9 may be formed of resins, such as polycarbonate, ABS, polypropylene and epoxy.

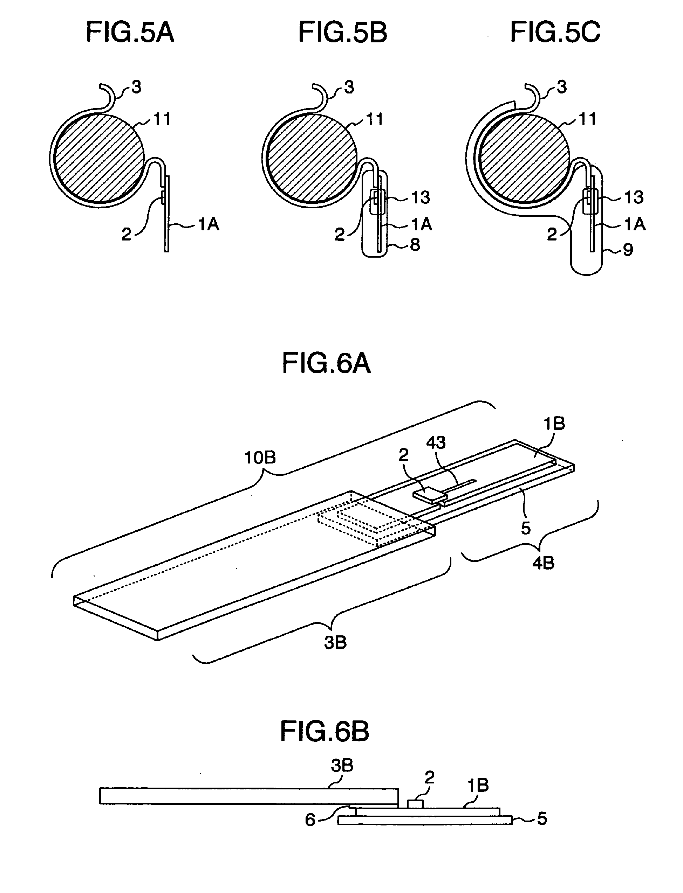

FIG. 4 shows another RFID tag 10A that has a thicker bar holding portion 3A to more firmly hold the tag 10A to the reinforcing bar 11. The inlet portion 4A is almost similar to the inlet portion 4 and spotwelded at 7 to the thicker bar holding portion 3A. How the RFID tag 10A is mounted to the reinforcing bar 11 is shown in FIGS. 5A-5C. It is mounted in the same way as the RFID tag 10, but to a larger reinforcing bar 11. In a concrete structure using no reinforcing bars, an opening may be formed in the concrete for the bar holding portion 3A to be secured to an H steel therein by a bolt.

A simple method of manufacturing an RFID tag 10 with a film-like inlet portion 4B will be explained by referring to FIG. 6A. The inlet portion 4B comprises a base film 5 and an antenna 1B formed on the base film 5. The antenna 1B is formed with a slit 43 that functions as an impedance matching circuit. The antenna 1B has an IC chip 2 mounted thereon. FIG. 6B shows the RFID tag 10B as seen from one side. The antenna 1B and the bar holding portion 3B are joined together with a bonding layer 6, which may be an insulating bonding agent or adhesive material or a conductive bonding agent. Even the use of the insulating bonding material allows the antenna 1B to be electrostatically coupled to the bar holding portion 3B through the bonding layer 6, so the antenna 1B is electrically connected to it at frequencies used by the RFID tag.

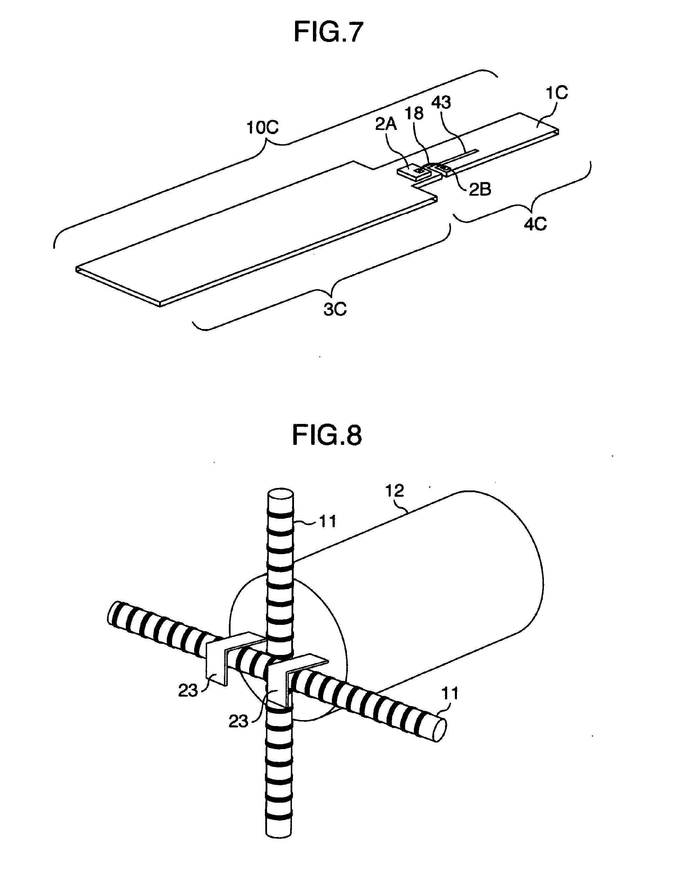

FIG. 7 explains the connection between the IC chip 2 and an antenna 1C. When the RFID tag 10 is attached to the reinforcing bar 11, the IC chip 2 and the antenna 1C may be subjected to stresses, resulting in the IC chip 2 being fractured and the connection between the IC chip 2 and the antenna 1C failing. To avoid this, as shown in FIG. 7, a wire 18 is used to connect an electrode on the upper surface of the IC chip 2A mounted on the antenna 1C to an electrode 2B on the antenna 1C. With this IC chip mounting method, the IC chip 2A put on the antenna 1C is protected by the antenna 1C. The wire 18 connecting the chip and the antenna alleviates the stresses. The connection between the IC chip 2A and the antenna 1C can be made either by applying a conductive bonding agent to the back of the IC chip 2A or by plating the back of the IC chip with Au and performing an ultrasonic bonding or metal eutectic bonding.

### <Second Embodiment>

The second embodiment will be explained by referring to FIG. 8, which shows how the RFID tag of this invention is mounted to a connected part of two reinforcing bars 11 crossing at right angles. Two bar holding portions 23 shut in a vertical bar between them and then hold a horizontal bar, thus serving as a binding wire. A mold 12 of the RFID tag serves as a spacer to keep a specified distance between the reinforcing bars and a concrete casting frame.

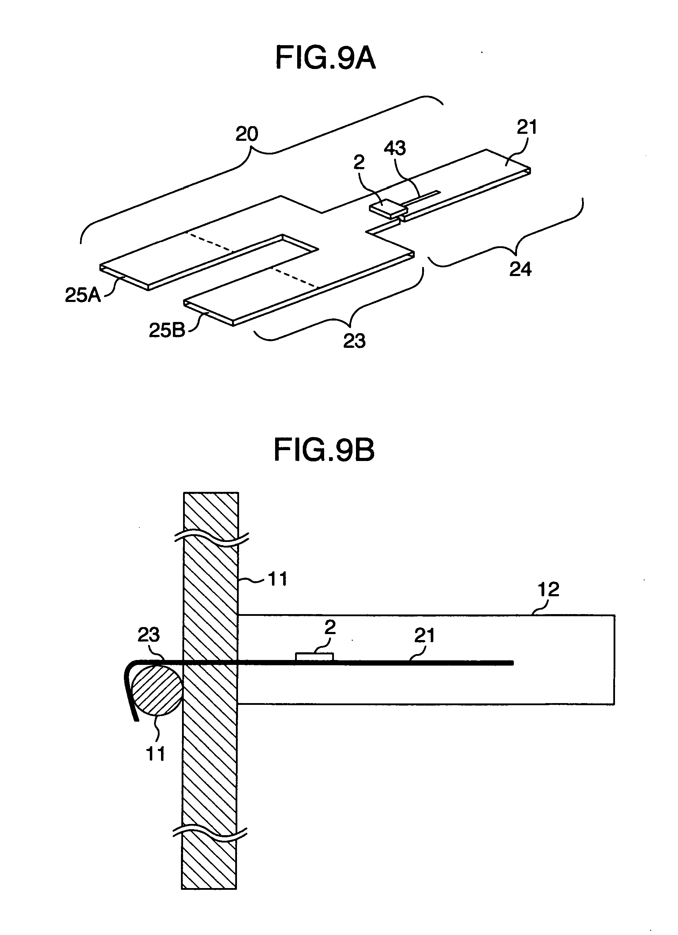

As shown in FIG. 9A, a Y-shaped RFID tag 20 has a U-shaped bar holding portion 23 with bar holding portions 25A and 25B spaced apart enough to receive the vertical bar in between. The inlet portion 24 is structured similar to that of the first embodiment. FIG. 9B is a cross section of the RFID tag 20. The RFID tag 20 is molded with epoxy resin that is formed into a cylindrical shape as indicated by 12. When the mold 12 of the RFID tag is used as a spacer, the length of the mold 12 is set equal to a desired spacer length.

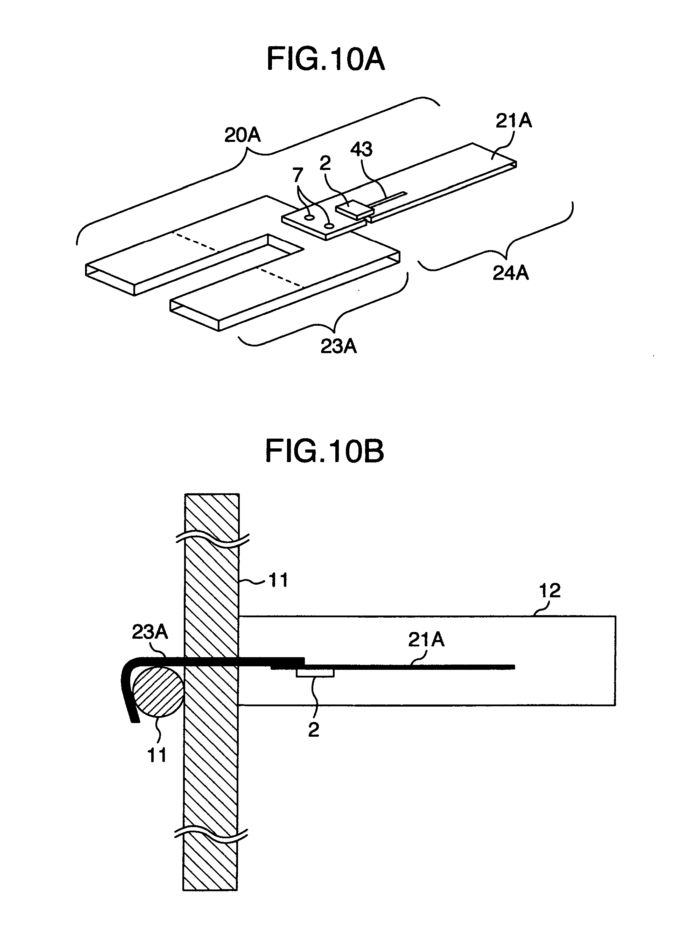

FIGS. 10A and 10B show another form of RFID tag 20A, which is similar to the RFID tag 20 of FIGS. 9A and 9B but has a reinforced bar holding portion 23A instead of the bar holding portion 23. The inlet portion 24A and the bar holding portion 23A are spotwelded as in the first embodiment.

### <Third Embodiment>

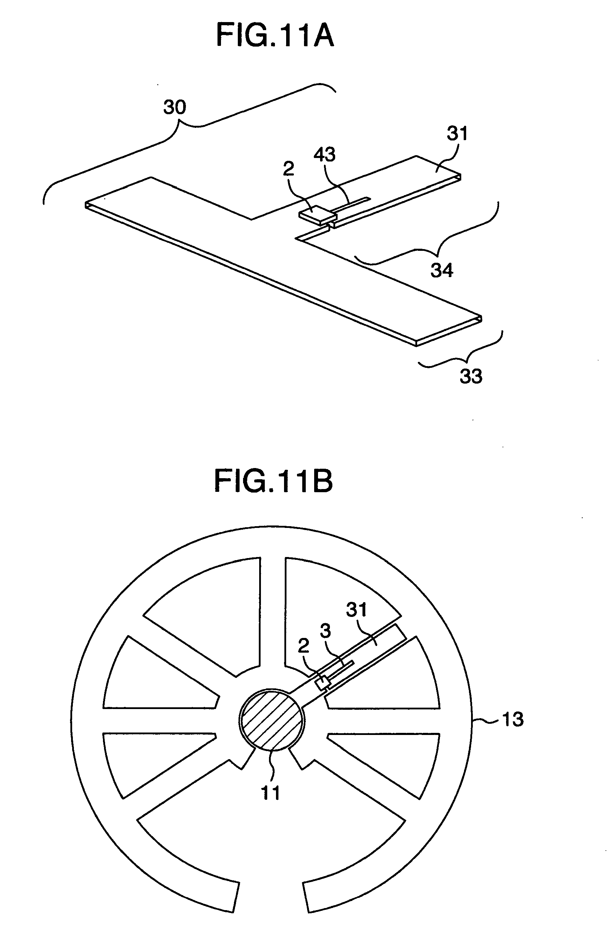

The third embodiment represents a construction in which an RFID tag is built into a spacer that keeps a specified distance between a concrete casting frame and reinforcing bars, securing a specified thickness of concrete between them. The third embodiment will be explained by referring to FIGS. 11A and 11B. To secure a predetermined thickness of concrete, a circular plastic spacer 13, like the one shown in FIG. 11B, is often used on reinforcing bars 11. The reinforcing bar 11 is held at a central part of the circular spacer 13. In this embodiment a RFID tag 30, such as shown in FIG. 11A, is built into the plastic spacer 13. This construction ensures that the bar holding portion 33 is in contact with the reinforcing bar 11. The bar holding portion 33 forms a center opening surface of the spacer 13. The RFID tag 30 is attached to the spacer 13 with a bonding agent or resin-molded to the spacer. The inlet 34 is similar in construction to the previous embodiment. The use of this arrangement can minimize the required volume of the RFID and therefore a reduction in the strength of the structure. Since the RFID tag is built into the spacer 13, it is reinforced by the spacer. Further, since during the assembly of the bars, simply attaching the spacers to the reinforcing bars can also have the RFID tags mounted on the bars at the same time, the RFID tags can be made usable without increasing the number of steps performed at the construction site. Although the circular spacer has been taken as an example, the spacer is not limited to a circular shape but may be formed in a variety of shapes as long as they can keep a specified distance between the bars and the concrete casting frame.

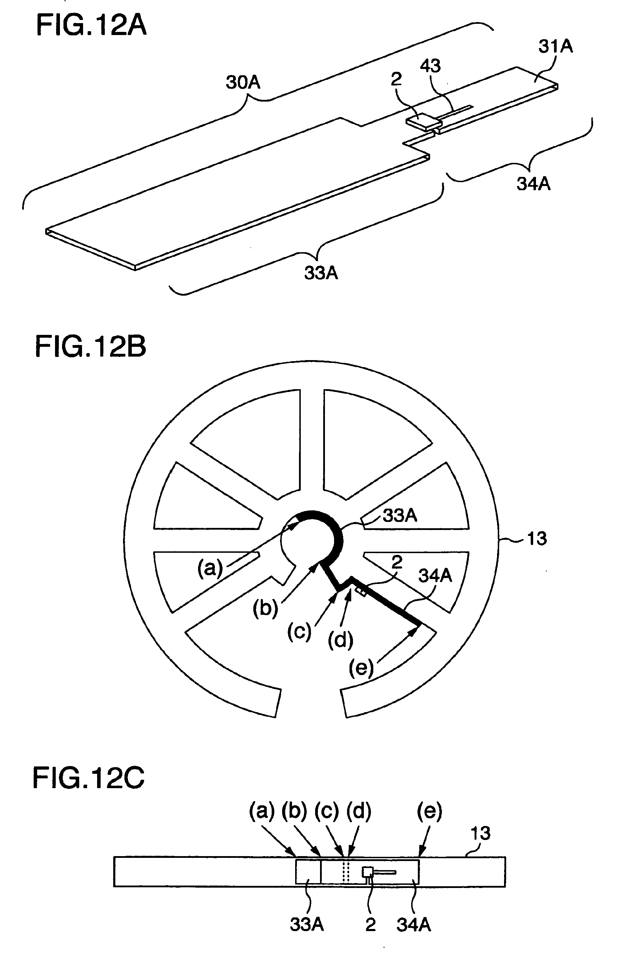

FIGS. 12A-12C show one variation of the third embodiment. While in FIGS. 11A and 11B the inlet portion 34 is attached to the upper surface of the spacer 13, FIGS. 12A-12C show the inlet portion 34A to be attached to the side surface of the spacer 13. The RFID tag 30A is linear in shape. FIG. 12C is a side view of the spacer 13, showing the RFID tag 30A attached to the side surface of the spacer 13.

The effect of attaching the spacer 13 to the side surface of the inlet portion 34 is to reduce impacts of aggregates applied to the RFID tag 30A when concrete is cast.

Epoxy resin, for example, may be coated over the IC chip of FIGS. 11A and 11B and FIGS. 12A-12C for protection, which also serves as its reinforcement.

### <Fourth Embodiment>

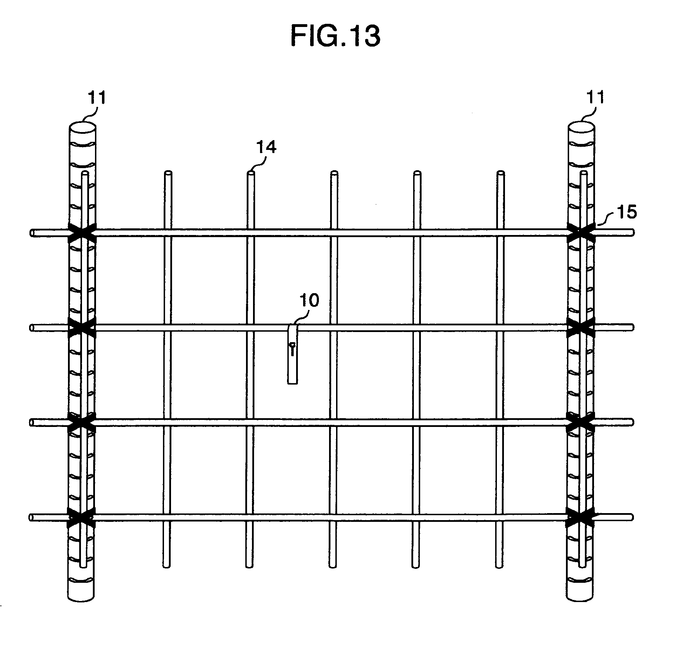

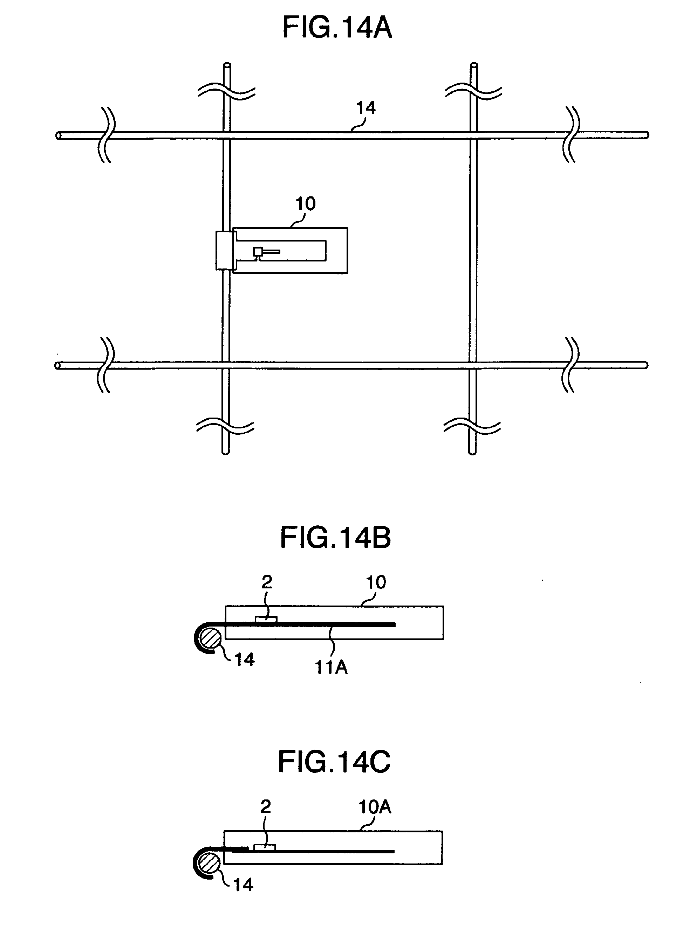

The fourth embodiment is how to attach the RFID tag 10 to a reinforcing bar mesh used in concrete walls and retaining walls. This fourth embodiment will be explained by referring to FIG. 13. The meshed bars 14 are held to the main bars 11 by binding wires 15. This arrangement is often used in PC panels. This embodiment explains an example of how the RFID tag 10 is attached to the meshed bars 14. FIG. 14A shows a tag attached to the meshed bars 14. The RFID tag 10 is the RFID tag of the first embodiment made linear in shape. Bars used in the mesh are mostly 4-10 mm in diameters and arranged as shown in FIGS. 14A and 14B. With the RFID tag 10 attached to a central part of the bar mesh as shown in FIG. 13, it is possible to read information recorded in the IC chip 2 mounted on the RFID tag 10 even at a location remote from the tag. A location on a wall directly above the RFID tag is nearest to the tag and has the largest communication distance. The advantage of this arrangement is that, even if the RFID tag is embedded in a wall with a relatively wide surface and its location is not known, it can be detected easily.

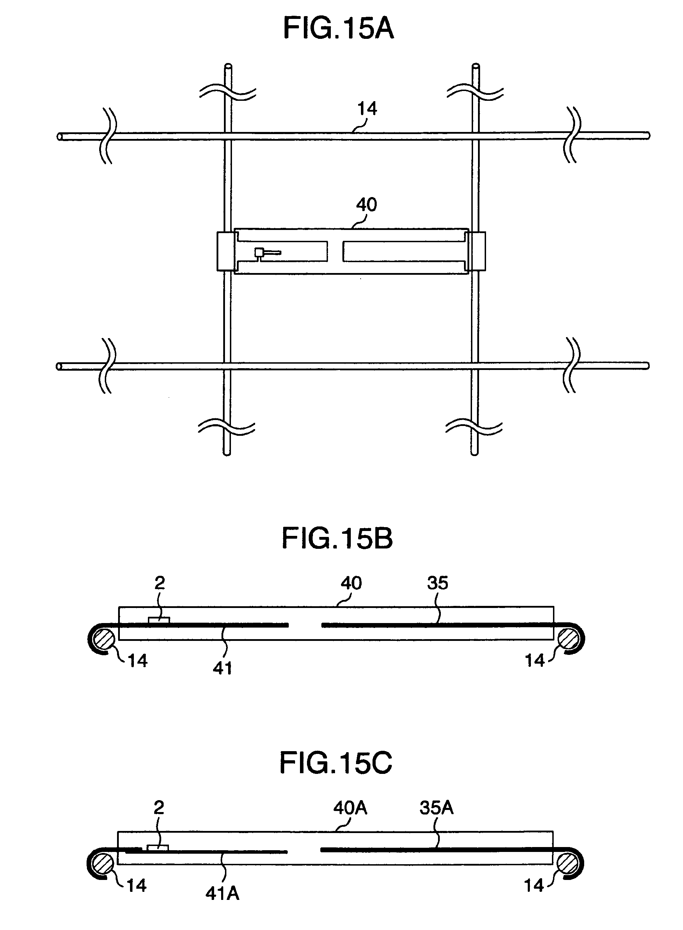

FIGS. 15A-15C show an arrangement designed to prevent the RFID tag from being moved as practically as possible when concrete is cast. If, during the concrete casting, the RFID tag 10 is rotated and moved toward the concrete casting frame, it is expected that deficiencies are generated corresponding to a decrease of the thickness of the concrete covering the reinforcing bars. To avoid this, an RFID tag 40 is fixed to two nearly parallel bars of the mesh as shown in FIG. 15A to prevent it from getting rotated about the bar when concrete is cast. As shown in FIGS. 15B and 15C, the RFID tag 40 has a bar holding member 35, 35A arranged to oppose the antenna 41, 41A and has them molded with epoxy resin.

### <Fifth Embodiment>

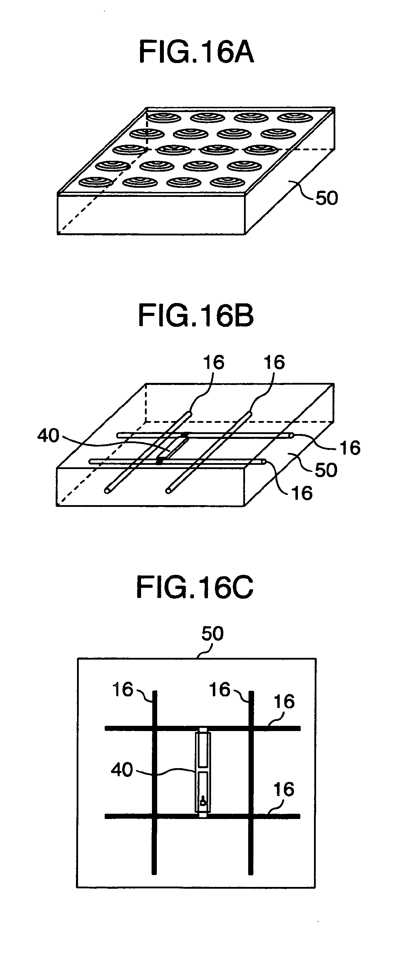

FIGS. 16A-16C show the fifth embodiment of the RFID tag as applied to pedestrian guiding sidewalk blocks. FIG. 16A shows an appearance of a pedestrian guiding concrete block 50 with projections on its surface. As shown in FIG. 16B, the internal structure of the concrete block 50 has reinforcing bars 16, to which the RFID tag 40 is attached in a way described in the fourth embodiment. How the RFID tag 40 is attached to the bars is shown in FIG. 16C. This arrangement allows information recorded in an IC chip on the RFID tag 40 to be read over an almost entire surface of the 300-mm square pedestrian guide block.

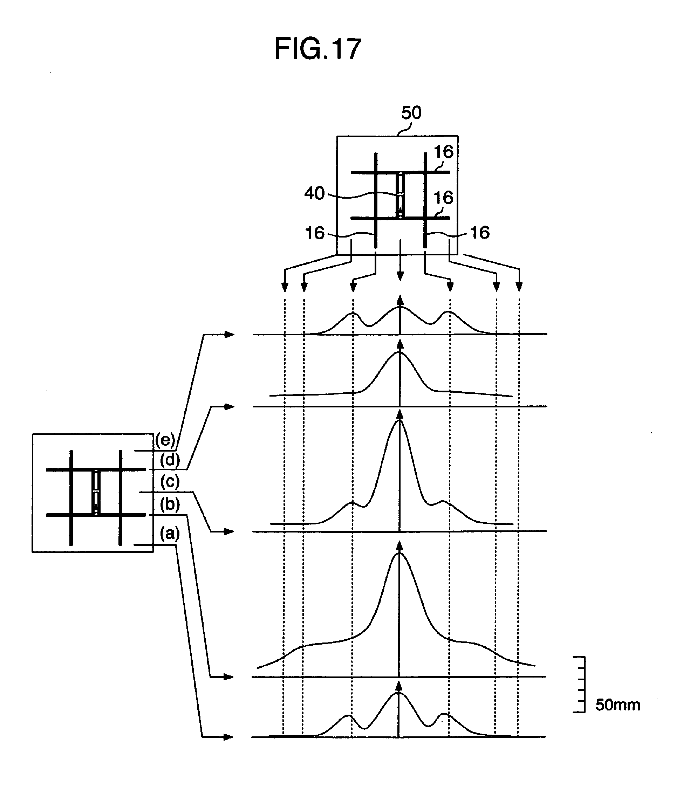

FIG. 17 shows a result of measurement of information reading distance or communication distance of the RFID tag 40 over the surface of the guide block. The abscissa in the graph represents a location on the block and corresponds to individual positions on the guide block shown at the top of FIG. 17. The ordinate represents a communication distance with its scale shown at the lower right. Five graphs correspond, from bottom to top, to the positions (a)-(e) on the guide block shown to the left. From these graphs it is seen that information from the RFID tag 40 can be read in a range where the reinforcing bars 14 exist. Therefore, by arranging the reinforcing bars 14 at positions close to the edges of the guide block 50, the information from the RFID tag can be read over a wider range.

In conventional devices, an attempt to read RFID tag information over a wider area requires an RFID tag to have a large antenna, giving rise to a cost problem. This embodiment, however, allows the RFID tag of general size to cope with the normal size of the pedestrian guide block, leading to a cost reduction in the pedestrian guiding system. This in turn makes it possible to guide visually handicapped people with improved accuracy and safety and to communicate a large volume of information in the traffic system.

This embodiment can be applied not only to the pedestrian guiding blocks but also to utility poles, concrete cross ties, PC panels and roads.

### <Impedance Matching between Antenna and IC Chip>

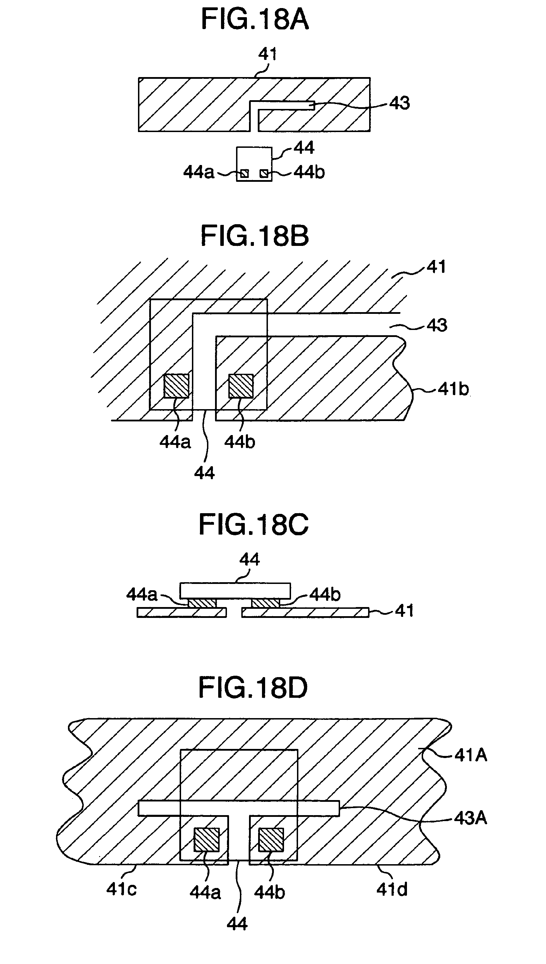

An example of mounting an IC chip 3 on an antenna 41 formed with an impedance matching slit will be explained in detail. FIGS. 18A-18D show steps of mounting the IC chip 3 on a feeding portion of the antenna 41. FIG. 18A represents the antenna 41 and feeding portions of the IC chip 3. FIG. 18B is an enlarged see-through view of the antenna 41 and the IC chip 3 mounted on the antenna. FIG. 18C shows a cross section of a joint between the antenna 41 and the IC chip 3.

As shown in FIG. 18A, the feeding portion of the antenna 41 is formed with an L-shaped slit 43 for impedance matching between the IC chip 3 and the antenna 41. A portion of the antenna surrounded by the L-shaped slip 43 is formed as a stub 41b. The IC chip 3 is also formed with signal input/output electrodes 3a, 3b spaced apart enough to straddle the slit 43.

That is, the width of the slit 43 is slightly narrower than the distance between the signal input/output electrodes 3a, 3b of the IC chip 3. Therefore, when the IC chip 3 is put on the antenna 41 as shown in FIG. 18B, the signal input/output electrodes 3a, 3b of the IC chip 3 straddle the slit 43 and connect to the antenna 41. The stub 41b formed by the slit 43 is serially connected between the antenna 41 and the IC chip 3 so that it functions as an inductance component between the antenna 41 and the IC chip 3. Therefore, the input/output impedances of the antenna 41 and the IC chip 3 are matched by this inductance component. That is, the slit 43 and the stub 41b combine to form the matching circuit. As shown in FIG. 18C, the signal input/output electrodes 3a, 3b of the IC chip 3 are electrically connected to the antenna 41 through gold bumps 44a, 44b by ultrasonic bonding or metal eutectic bonding or by bonding through an anisotropic conductive film (not shown).

The slit formed in the antenna 41A may be formed in a T shape rather than the L shape. FIG. 18D is a conceptual view showing the IC chip 3 mounted on the feeding portion of the T-shaped slit 43A of the antenna 41A. As shown in FIG. 18D, a T-shaped slit 43A is formed in the antenna 41A and stubs 41c, 41d are serially connected between the IC chip 3 and the antenna 41A. This arrangement can also match the impedances of the antenna 41A and the IC chip 3 as in the case of the L-shaped slit 43.

It should be further understood by those skilled in the art that although the foregoing description has been made on embodiments of the invention, the invention is not limited thereto and various changes and modifications may be made without departing from the scope of the appended claims as interpreted by the description and drawings.

## Claims

1. An RFID tag for use in reinforced concrete to wirelessly transmit information recorded in an IC chip, the RFID tag comprising:
said IC chip (2);
an inlet portion (4) having an antenna (1) connected to said IC chip (2); and
a reinforcing-bar holding portion (3);
wherein said antenna (1) is connected to said reinforcing-bar holding portion (3).

2. An RFID tag for use in reinforced concrete according to claim 1, wherein said antenna (1) is formed with an impedance matching circuit (7) for said IC chip (2).

3. An RFID tag for use in reinforced concrete according to claim 1, wherein said inlet portion (4) and said reinforcing-bar holding portion (3) are integrated.

4. An RFID tag for use in reinforced concrete according to claim 1, wherein, if a wavelength used by said antenna (1) is λ, length of the antenna is electric 1/4λ.

5. An RFID tag for use in reinforced concrete according to claim 1, wherein said reinforcing-bar holding portion (3) is shaped like a letter of C and holds said reinforcing-bar (11) at a recessed portion of the C-shape.

6. An RFID tag for use in reinforced concrete according to claim 1, wherein said reinforcing-bar holding portion (4) is shaped like a letter of U and holds two crossing bars at a recessed portion of the U-shape.

7. An RFID tag for use in reinforced concrete according to claim 1, wherein said antenna (1) and said reinforcing-bar holding portion (3) are connected by spot welding.

8. An RFID tag for use in reinforced concrete according to claim 1, wherein said antenna (1B) is formed on a film (5) and connected to said reinforcing-bar holding portion (3) through a bonding material.

9. An RFID tag for use in reinforced concrete according to claim 1, wherein a mold (12) covering said antenna (1) mounting said IC chip (2) and at least a part of said reinforcing-bar holding portion (3) constitute a spacer.

10. An RFID tag for use in reinforced concrete according to claim 1, wherein a spacer (13) keeps a predetermined distance between a concrete casting frame and reinforcing bars (11);
wherein said reinforcing-bar holding portion (3) is formed at a portion of said spacer (13) that holds said reinforcing bars (11).

11. An RFID tag for use in reinforced concrete according to claim 1, further comprising:
a reinforcing-bar holding member (35) for attachment to said reinforcing bars (14);
wherein said inlet portion (4), said reinforcing-bar holding portion (3) and said reinforcing-bar holding member (35) are arranged on a same plane.

12. An RFID tag for use in reinforced concrete according to claim 11, wherein said reinforcing-bar holding member (35) is bridged between two almost parallel bars (14) of a reinforcing bar mesh.

13. An RFID tag for use in reinforced concrete according to claim 11, wherein said reinforcing-bar holding member (35) is build into a pedestrian guide block (50).
